# EUROPÄISCHE PATENTSCHRIFT

(11) **EP 0 869 731 B1**
(45) Veröffentlichungstag und Bekanntmachung des Hinweises auf die Patenterteilung: **15.03.2000**
(21) Anmeldenummer: 96942230.2
(22) Anmeldetag: 23.12.1996
(51) Int. Cl.: A47J 31/54

(54) **KAFFEEMASCHINE**
COFFEE MACHINE
MACHINE A CAFE

(30) Priorität: 28.12.1995 CH 368695
(43) Veröffentlichungstag der Anmeldung: 14.10.1998
(73) Patentinhaber: Creaholic S.A., 2502 Bienne (CH); Illy, Francesco, 6045 Meggen (CH)
(72) Erfinder: ILLY, Francesco, CH-6045 Meggen (CH); HELL, Matthias, CH-3005 Bern (CH)
(74) Vertreter: Frei, Alexandra Sarah
(86) Internationale Anmeldenummer: CH9600460
(87) Internationale Veröffentlichungsnummer: WO9724052

(56) Entgegenhaltungen:
- FR-A- 2 297 024
- US-A- 1 631 753
- US-A- 3 178 557
- US-A- 4 032 748
- US-A- 5 262 621

## Beschreibung

Die Erfindung betrifft eine Kaffeemaschine gemäss dem Oberbegriff des ersten Patentanspruchs.

Kaffeemaschinen weisen eine Wasservorratskammer, ein Heizsystem zum Erhitzen des Wassers, eine Brühkammer zur Aufnahme von Kaffeegut und Fördermittel zum Fördern des Wassers von der Wasservorratskammer in die Brühkammer auf. Herkömmliche Kaffeemaschinen unterscheiden sich je nach Kaffeeart, welche mit der entsprechenden Kaffeemaschine hergestellt werden soll. So wird in Espresso-Kaffeemaschinen Wasser erhitzt und mittels einer Pumpe unter Hochruck (ca. 10 bar) in die Brühkammer gepumpt; das Kaffeegut ist fein gemahlen. In Mokka-Kaffeemaschinen wird das Wasser in Form von Dampf durch ein Steigrohr dem fein gemahlenen Kaffee in der Brühkammer zugeführt. Auch in Filter-Kaffeemaschinen wird das Wasser in Form von Dampf durch ein Steigrohr geführt; es kondensiert jedoch wieder und erreicht den fein gemahlenen Kaffe wieder als heisse Flüssigkeit, um dann unter Umgebungsdruck langsam den Filter zu passieren.

Das Heizsystem herkömmlicher Kaffeemaschinen besteht normalerweise aus einem massiven Elektroheizblock. Dieser Elektroheizblock ist ein Wärmereservoir mit grosser Wärmekapazität; deshalb ist er thermisch träge. Einerseits ist dies ein Vorteil, weil sich seine Temperatur nur wenig erniedrigt, wenn ein bestimmtes Wasservolumen durch ihn hindurchströmt und ihm eine bestimmte Wärmeenergie entzieht. Andererseits ist die grosse Wärmekapazität ein Nachteil, weil dem Elektroheizblock viel Heizenergie zugeführt werden muss, um seine Temperatur auf einen gewünschten Wert zu erhöhen. Die herkömmliche Kaffeemaschine braucht nach dem Einschalten eine Vorheizzeit im Bereich von Minuten, bevor sie den ersten Kaffee zubereiten kann. Diese Vorheizzeit stellt für den Benützer einen lästigen Zeitverlust dar.

Um den Elektroheizblock nicht vor jeder Kaffeezubereitung neu aufheizen zu müssen, wird ihm Heizenergie zugeführt, solange die Kaffeemaschine eingeschaltet ist. Die Kaffeemaschine braucht also im Bereitschaftszustand ("Stand-by-Modus") ständig Energie, welche sie sinnlos an die Umgebung abgibt. War die Kaffeemaschine eine Zeitlang ausgeschaltet, so muss auch für eine einmalige Kaffeezubereitung der gesamte massive Elektroheizblock erhitzt werden, und nur ein kleiner Teil der dafür benötigten Energie wird wirklich für den Kaffee gebraucht. Zusammenfassend lässt sich also sagen, dass herkömmliche Kaffeemaschinen mit der Zeit der Benützer und mit der elektrischen Energie unökonomisch umgehen.

Ein schneller elektrischer Wassererhitzer für eine Kaffeemaschine wird in der Patentschrift US-A-1,631,753 vorgeschlagen. Dieser Wassererhitzer enthält drei schraubenförmig gewundene, koaxial ineinander angeordnete Rohre aus Kupfer, welche nacheinander vom zu erhitzenden Wasser durchströmt werden. Um das mittlere Rohr ist eine elektrische Widerstandsheizung gewickelt. Die Rohre und die Widerstandsheizung sind durch Asbestband voneinander isoliert. Diese spezielle Anordnung bewirkt, dass Wasser im mittleren Rohr direkt durch die Widerstandsheizung und Wasser im äusseren und im inneren Rohr indirekt durch Wärmestrahlung beheizt wird. Das so erhitzte Wasser wird dann einer Kaffeegut beinhaltenden Brühkammer zugeführt. Dieser Wassererhitzer ist zwar schneller als ein massiver Elektroheizblock. Mit seinen dicken Kupferrohren und Asbestisolationen ist er aber immer noch thermisch träge. Es dauert relativ lange, bis die Kupferrohre durch die Asbestisolation hindurch erhitzt sind und die Wärmeenergie überhaupt bis zum Wasser gelangt.

In der Patentschrift US-A-5,262,621 wird das Problem der langen Aufheizzeiten durch eine Induktionsheizung und ein elektronisches Überwachungs- und Kontrollsystem gelöst. Der dort beschriebene Wasserheizapparat verwendet ein Metallrohr, welches von einer elektromagnetischen Spule umgeben ist. Wenn Wasser durch das Metallrohr fliesst, wird eine Wechselspannung an der Spule angelegt; mittels elektromagnetischer Induktion wird das Metallrohr und mittels Wärmeleitung das durchfliessende Wasser erhitzt. Die Frequenz der Wechselspannung wird vom elektronischen Überwachungs- und Kontrollsystem als Funktion der Wasserausgangstemperatur eingestellt.

Der Erfindung liegt die Aufgabe zugrunde, eine weitere Kaffeemaschine anzugeben, die erstens keine Vorheizzeit benötigt und zweitens im Bereitschaftszustand keine Energie verbraucht.

Die Aufgabe wird gelöst durch die erfindungsgemässe Kaffeemaschine, wie sie in den Patentansprüchen definiert ist. Das Konzept der erfindungsgemässen Kaffeemaschine beruht darauf, eine schnell reagierende Heizung zu verwenden und dem heissen Wasser auf seinem Weg zum Kaffeegut möglichst wenig Wärmeenergie zu entziehen. **Tabelle 1** zeigt einen Vergleich der Heizungen der erfindungsgemässen mit einer herkömmlichen Kaffeemaschine.

**Tabelle 1.**

| Eigenschaft der Heizung | erfindungsgemässe Kaffeemaschine | herkömmliche Kaffeemaschine |
|---|---|---|
| Wärmekapazität | klein | gross |
| Reaktion | schnell | langsam |
| Temperaturänderung bei Kaffeeherstellung | gross | klein |

Die erfindungsgemässe Kaffeemaschine soll polyvalent sein, d. h. verschiedene Kaffeearten herstellen können. Dies bedeutet, dass die verwendeten Teile entlang des Wasserpfades bezüglich mechanischer Festigkeit für den "schlimmsten Fall", also für Hochdruck bei der Espresso-Herstellung, ausgelegt sein müssen. Die verwendeten Teile sollen also bezüglich mechanischen und thermischen Eigenschaften optimiert sein, wobei zum Teil gegensätzliche Kriterien zu berücksichtigen und in einer Kompromisslösung zu vereinen sind.

Die Vorteile der erfindungsgemässen Kaffeemaschine werden unter anderem durch die Kombination folgender Merkmale erzielt. Es wird ein Durchlauferhitzer mit kleiner Wärmekapazität statt eines massiven Elektroheizblocks verwendet. Um die erwünschte Wasserausgangstemperatur zu erhalten, wird ein Regelkreis eingesetzt. Materialien und Ausgestaltung ungeheizter Teile entlang des Wasserpfades sind derart gewählt, dass sie dem Überdruck des Wassers standhalten und gleichzeitig dem Wasser ein Minimum an Wärmeenergie entzogen wird. Insbesondere müssen diese ungeheizten Teile kleine Wärmekapazitäten und gegenüber Wasser kleine Wärmedurchgangskoeffizienten, aber gleichzeitig eine genügende Festigkeit aufweisen.

Die erfindungsgemässe Kaffeemaschine wird anhand der Figuren detailliert beschrieben. Es zeigen:
- Fig. 1: einen schematischen Querschnitt durch die ganze Kaffeemaschine,
- Fig. 2: den zwecks klarerer Darstellung schichtweise offengelegten Durchlauferhitzer in perspektivischer Ansicht,
- Fig. 3: den Durchlauferhitzer und die Pumpe mit Regelung,
- Fig. 4: einen Querschnitt durch die Brühkammer und ihren Verschlussmechanismus,
- Fig. 5: eine Aussenansicht der Kaffeemaschine und
- Fig. 6 und 7: Querschnitte durch das Abstellgitter mit zwei verschieden grossen Tassen.

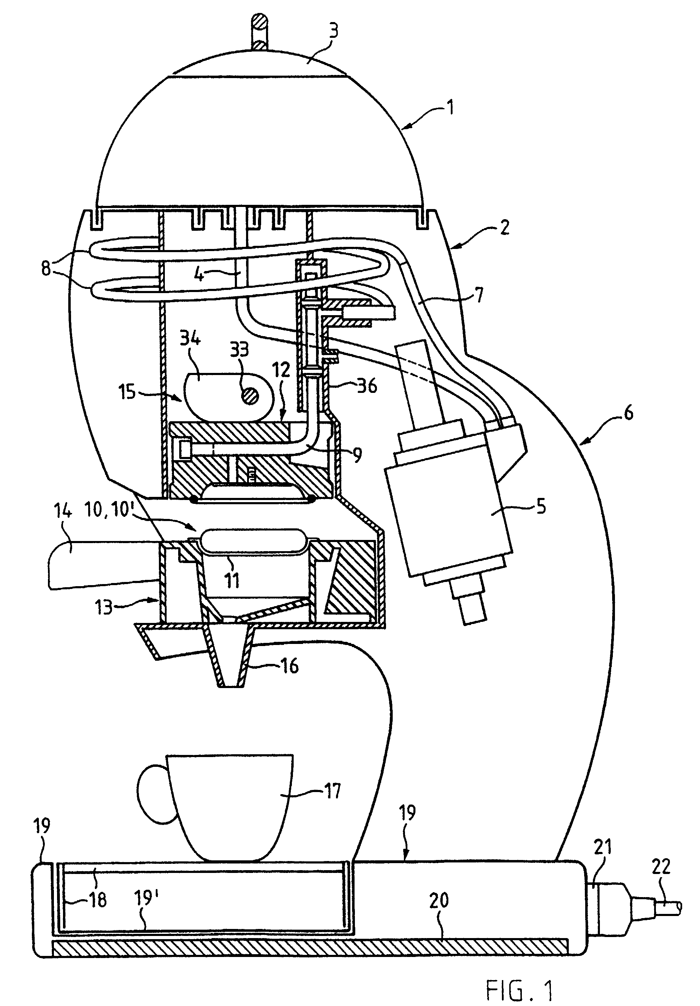

**Figur 1** zeigt in einem Querschnitt eine schematische Gesamtübersicht einer bevorzugten Ausführungsform der erfindungsgemässen Kaffeemaschine. Eine Wasservorratskammer 1 ist sichtbar auf einem "Kopf" 2 der Kaffeemaschine aufgesetzt. Sie kann aus einem durchsichtigen Material bestehen; dies hat den Vorteil, dass der Benützer jederzeit den Wasserstand sieht und rechtzeitig Wasser nachfüllen kann. Die Wasservorratskammer 1 ist durch den Benützer abmontierbar und somit waschbar. Sie besitzt einen Deckel 3, welcher lose aufliegen, mit einem Gewinde aufschraubbar oder mit einem Scharnier befestigt sein kann.

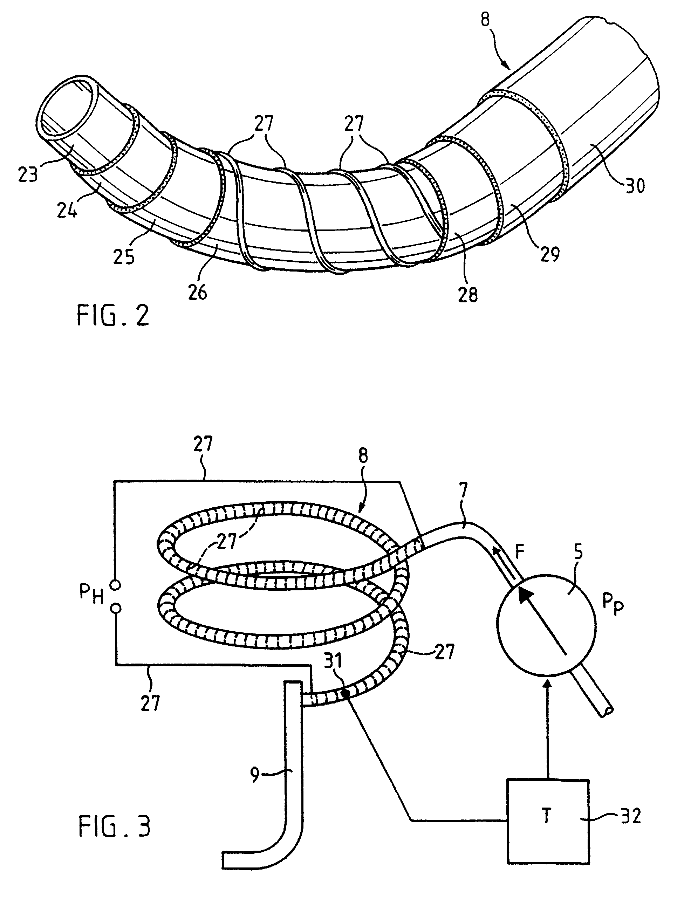

Durch einen Schlauch oder ein Rohr 4 gelangt das Wasser von der Wasservorratskammer 1 zu einer Pumpe 5, welche sich beispielsweise in einem "Hals" 6 der Kaffeemaschine befindet. Das Wasser wird von der Pumpe 5 durch einen Schlauch oder ein Rohr 7 zu einem Durchlauferhitzer 8 und durch diesen hindurch gepumpt. Im Durchlauferhitzer 8 wird es auf eine gewünschte Temperatur von mehr als 90 °C erhitzt oder zum Verdampfen gebracht. Der Durchlauferhitzer 8 ist beispielsweise ein mehrschichtiges, mit elektrischer Heizung versehenes Rohr. Die Details von Pumpe 5 und Durchlauferhitzer 8 sind weiter unten anlässlich der Figuren 2 und 3 näher beschrieben.

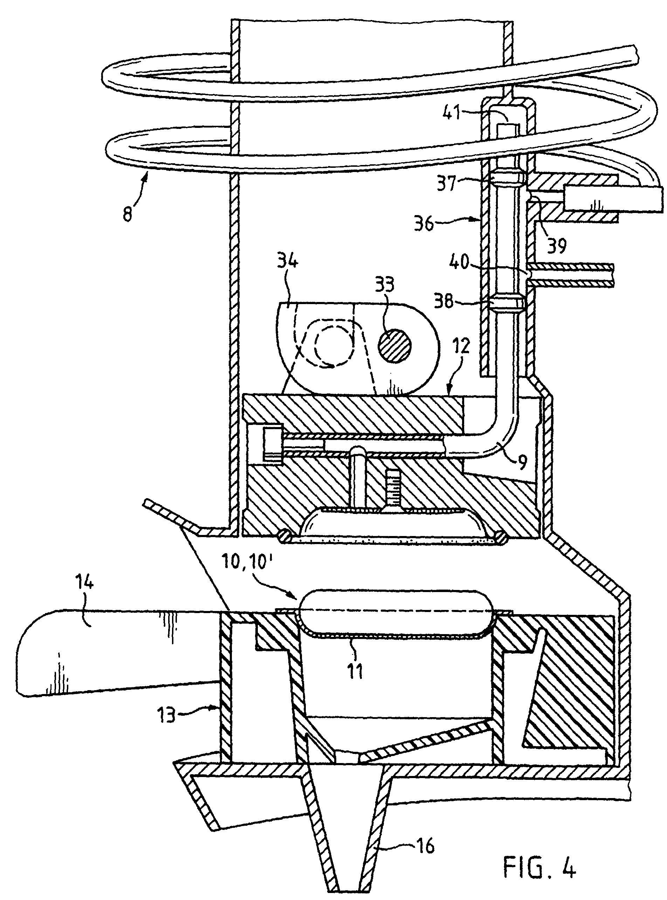

Ein Verbindungsrohr 9, beispielsweise aus rostfreiem Stahl, verbindet den Durchlauferhitzer 8 mit einer Brühkammer 10. Es lässt sich kaum vermeiden, dass sich das Wasser im Verbindungsrohr 9 um einige Grad Celsius abkühlt. In der Brühkammer 10 befindet sich Kaffeegut 10', durch welches das heisse Wasser oder der Dampf hindurchgepresst wird. Die Brühkammer 10 besteht im wesentlichen aus einem Brühkammerunterteil 11 und einem Brühkammerdeckel 12. Der Brühkammerunterteil 11 ist in einer Fassung 13 mit Griff 14 eingesetzt. Die Fassung 13 wird vom Benützer in die Kaffeemaschine eingeschoben und mit einem Verschlussmechanismus 15 an der Kaffeemaschine befestigt; gleichzeitig wird dadurch die Brühkammer 10 verschlossen. Die Details von Brühkammer 10 und Verschlussmechanismus 15 sind weiter unten in Fig. 4 näher beschrieben.

Der fertige heisse Kaffee fliesst durch einen Ausguss 16 aus der Brühkammer 10 in eine Tasse 17. Die Tasse 17 steht dabei auf einem Abstellgitter 18, welches in einen Einsatz 19' und dieser wiederum in einen Sockel 19 eingesetzt ist. Der Sockel 19 kann beispielsweise mit einem Zinkguss- oder einem Bleiteil 20 beschwert sein, um die Stabilität der Kaffeemaschine zu verbessern. Ein Eingang 21 eines Kabels 22 zur Speisung der Kaffeemaschine mit der Netzspannung befindet sich vorzugsweise im Sockel 19.

In **Tabelle 2** wird der Wasserpfad zusammengefasst und einprägsam als Folge von vier Abschnitten dargestellt, die sich durch Temperatur- und Druckverhältnisse unterscheiden. Die angegebenen Zahlenwerte sind ungefähre Werte für das Beispiel der Espresso-Herstellung; für andere Kaffeearten können sie verschieden sein.

**Figur 2** zeigt den inneren Aufbau eines Durchlauferhitzers 8, wie er vorzugsweise in der erfindungsgemässen Kaffeemaschine verwendet wird. Gegenüber einem in herkömmlichen massiven Elektroheizblock hat ein solcher Durchlauferhitzer 8 den Vorteil, Temperaturänderungen schnell auszuführen. Er muss deshalb nicht vorgeheizt werden und verbraucht im Bereitschaftszustand keine Energie. In einer bevorzugten Ausführungsform besteht der Durchlauferhitzer 8 aus einem mit Wasser durchströmbaren Innenrohr 23, welches beispielsweise aus Aluminium, rostfreiem Stahl oder hochtemperaturbeständigem Kunststoff gefertigt ist. Um das Innenrohr 23 ist mindestens eine innere Isolationsschicht 24-26 aus einem elektrisch isolierenden, thermisch beständigen Material, beispielsweise einem hochtemperaturbeständigen Kunststoff, angebracht. Um die inneren Isolationsschichten 24-26 ist ein Heizdraht 27 aus einer hochohmigen Metallegierung, beispielsweise einer NiCr-Legierung, gewickelt. Um den Heizdraht 27 ist mindestens eine äussere Isolationsschicht 28-30, beispielsweise wiederum aus hochtemperaturbeständigem Kunststoff, angebracht.

**Tabelle 2.**

| Abschnitt | Temperatur | Druck |
|---|---|---|
| Wasservorratskammer 1 bis Eingang Pumpe 5 | tief | niedrig |
| | (20 °C) | (1 bar) |
| Ausgang Pumpe 5 bis Eingang Durchlauferhitzer 8 | tief | hoch |
| | (20 °C) | (10 bar) |
| Ausgang Durchlauferhitzer 8 bis Eingang Brühkammer 10 | hoch | hoch |
| | (> 90 °C) | (10 bar) |
| Ausgang Brühkammer 10 bis Tasse 17 | hoch | niedrig |
| | (> 90° C) | (1 bar) |

Der Durchlauferhitzer 8 ist Hauptbestandteil des Heizsystems der erfindungsgemässen Kaffeemaschine; das gesamte Heizsystem ist in **Fig. 3** dargestellt. Von der inneren Struktur des Durchlauferhitzers 8 ist in Fig. 3 einzig der Heizdraht 27 eingezeichnet. Der Durchlauferhitzer 8 hat vorzugsweise die Form einer Schraubenfeder und ist schwimmend gelagert. Am Eingang des Durchlauferhitzers 8 befindet sich die Pumpe 5 mit dem Rohr 7, an seinem Ausgang das Verbindungsrohr 9. Die Pumpe 5 ist vorzugsweise beweglich oder fliegend aufgehängt und vibriert während des Betriebs, wie dies zum Beispiel eine Membranpumpe tut. Die Vibrationen werden auf den Durchlauferhitzer 8 übertragen. Die so dem Durchlauferhitzer 8 aufgezwungenen Beschleunigungen verhindern oder vermindern eine Verkalkung des Durchlauferhitzerinnenrohrs 23 bzw. begünstigen die Kalkablösung von den Rohrinnenwänden.

Der Durchlauferhitzer 8 ist mit einem Regelkreis ausgestattet, welcher gewährleistet, dass bei jeder Kaffeezubereitung das Wasser den Durchlauferhitzer mit der gewünschten Temperatur verlässt. Zu diesem Zweck ist gegen Ende des Durchlauferhitzers 8 ein Temperatursensor 31 zur Messung der Wassertemperatur T angebracht. Die gemessene Temperatur T ist vorzugsweise Regelgrösse für die Leistung P_{P} der Pumpe 5 und damit für den Wasserfluss F. In einer anderen Variante ist die Temperatur T Regelgrösse für die Heizleistung P_{H} im Heizdraht 27. In einer dritten Variante werden sowohl Pumpleistung P_{P} als auch Heizleistung P_{H} gleichzeitig geregelt. Zur Regelung wird vorzugsweise ein Mikroprozessor 32 herangezogen, welcher vorzugsweise in der Nähe der Pumpe 5 eingebaut ist. Statt des Mikroprozessors 32 kann auch eine einfachere elektronische Schaltung zur Regelung benützt werden.

Der Temperatursensor 31 und der Mikroprozessor 32 werden ausserdem benötigt, um den Benützer vor einer Verkalkung des Durchlauferhitzers 8 zu warnen. Eine eventuelle Kalkschicht auf der Rohrwand des Durchlauferhitzerinnenrohrs wirkt nämlich isolierend und verlängert die Zeit t, die bei einer gegebenen Heizleistung P_{H} benötigt wird, um eine gegebene Wassermenge zu erhitzen. Deshalb kann aus Heizleistung P_{H}, Pumpleistung P_{P} und Aufheizzeit t auf die Rohrverkalkung geschlossen werden. Bei jeder Kaffeezubereitung überprüft der Mikroprozessor, ob die Rohrverkalkung nicht einen kritischen Wert überschritten hat. Ist dies der Fall, so wird der Benützer durch ein akustisches und/oder optisches Warnsignal gewarnt. Nach einer solchen Warnung kann der Benützer geeignete Entkalkungsmassnahmen ergreifen.

Die Brühtemperatur hat einen sehr empfindlichen Einfluss auf den Geschmack des Kaffees. Die Kaffeequalität muss trotz der erfindungsgemäss erreichten Zeit- und Energieeinsparung konstant hoch bleiben und darf nicht davon abhängen, ob die ungeheizten Teile 9-12 entlang des Wasserpfades zwischen Durchlauferhitzer 8 und Kaffeegut 10' kalt oder durch eine vorangehende Brühung bereits heiss sind. Dem heissen Wasser darf also zwischen Durchlauferhitzer 8 und Kaffeegut 10' nur ein Minimum an Wärmeenergie entzogen werden. Zu diesem Zweck müssen zwei Forderungen erfüllt sein. Erstens müssen die ungeheizten Teile 9-12 entlang des Wasserpfades kleine Wärmekapazitäten, d. h. kleine spezifische Wärmekapazitäten und kleine Massen, aufweisen. Zweitens müssen die ungeheizten Teile 9-12 gegenüber Wasser kleine Wärmedurchgangskoeffizienten, d. h. kleine Wärmeübergangskoeffizienten und/oder kleine Wärmeleitfähigkeiten, aufweisen. Gleichzeitig müssen aber die ungeheizten Teile 9-12 dem Überdruck des heissen Wassers von ca. 10 bar, wie er bei der Espresso-Herstellung auftritt, standhalten. Materialien und Ausgestaltung dieser Teile 9-12 müssen also bezüglich thermischen und mechanischen, sich teilweise widersprechenden Kriterien optimiert werden. Die als Beispiel dienende Ausführungsform löst die Optimierungsaufgabe gut. Das Verbindungsrohr 9 ist kurz und mechanisch fest. Unterteil 11 und Deckel 12 der Brühkammer 10 sind aus einem wärmeisolierenden Material, beispielsweise einem hochporösen keramischen Material wie Hohlkeramik oder Hohlporzellan oder einem wärmeisolierenden Kunststoff, hergestellt; ihre Masse wird möglichst klein gehalten.

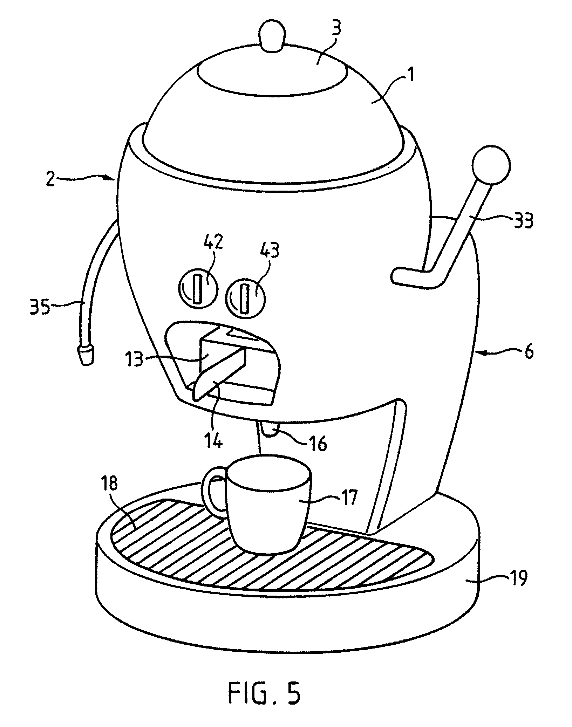

Anhand von **Figur 4** wird der Verschlussmechanismus 15 der Brühkammer 10 und die Brühkammer diskutiert. In herkömmlichen Kaffeemaschinen wird die Fassung der Brühkammer mit einem Bajonettverschluss an der Kaffeemaschine befestigt und gleichzeitig verschlossen. Demgegenüber ist in der erfindungsgemässen Kaffeemaschine die Brühkammer 10 in einer Fassung 13 eingebaut, welche vom Benützer mit der einen Hand am Griff 14 gehalten und schubladenartig in die Kaffeemaschine geschoben wird. Die Fassung 13 kann beispielsweise aus Kunststoff bestehen. Mit der anderen Hand bedient der Benützer den Verschlussmechanismus. über einen aussen am Kaffeemaschinengehäuse angebrachten Hebel 33, welcher in **Fig. 5** sichtbar ist. Die Drehbewegung des Hebels 33 wird auf einen Exzenter 34 übertragen, welcher den Brühkammerdeckel 12 nach unten bewegt und die Brühkammer 10 verschliesst. Durch Bewegung des Hebels 33 in Gegenrichtung wird der Brühkammerdekkel 12 gehoben und die Brühkammer 10 geöffnet; die Fassung 13 kann dann herausgenommen und das Kaffeegut 10' ausgewechselt werden.

Durch die Bewegung des Hebels 33 bzw. des Brühkammerdeckels 12 wird ausserdem der Ausgang des Wassers gesteuert. Nur wenn sich der Brühkammerdeckel 12 in der unteren Stellung befindet, ist also die Brühkammer 10 geschlossen, fliesst das heisse Wasser in die Brühkammer und von dort aus in die Kaffeetasse 17. Befindet sich der Brühkammerdeckel 12 hingegen in der oberen Stellung, ist also die Brühkammer 10 offen, so strömt das heisse Wasser oder wahlweise auch Dampf durch ein Dampfrohr 35 aus der Kaffeemaschine. Das heisse Wasser aus dem Dampfrohr 35 könnte beispielsweise für Teezubereitung verwendet werden, der Dampf beispielsweise zum Aufwärmen von Milch.

Die Weichenstellung für einen der beiden Pfade geschieht am Eingang des Verbindungsrohrs 9. Das Verbindungsrohr 9 befindet sich in einem Rohrgehäuse 36, ist gegen letzteres mit zwei Dichtringen 37, 38 abgedichtet und wird mit dem Brühkammerdeckel 12 mitbewegt. In der oberen Stellung befindet sich der obere Dichtring 37 über dem Wassereingang 39 und verhindert das Einströmen des heissen Wassers oder des Dampfes ins Verbindungsrohr 9; das heisse Wasser oder der Dampf strömt dann zum Eingang 40 des Dampfrohrs 35. In der unteren Stellung befindet sich der obere Dichtring 37 unter dem Wassereingang 39; das heisse Wasser strömt dann zum Eingang 41 des Verbindungsrohrs 9.

Für die Auswahl der gewünschten Kaffeeart ist ein Artenschalter 42 an der erfindungsgemässen Kaffeemaschine angebracht Dieser kann beispielsweise die Stellungen "Espresso", "Mokka", "Filterkaffee", "Kaffee Crème" oder auch andere Stellungen haben. Über den Artenschalter 42 werden verschiedene Programme des Mikroprozessors 32 ausgewählt, welche die jeweils gewünschte Wassertemperatur T und die richtige Pumpenleistung P_{P} einstellen.

Für verschiedene Kaffeearten sind verschiedene Brühkammerunterteile 11 vorgesehen, welche modulartig in die Fassung 13 eingesetzt werden können. Der Brühkammerunterteil 11 für Espresso- oder Mokka-Kaffee ist eine siebförmig durchlöcherte Platte aus wärmelisolierendem Material. Zur Herstellung von Filterkaffee muss der Brühkammerunterteil 11 einen Filter aufnehmen können und mit einem entsprechenden Ausguss versehen sein. Das Kaffeegut 10' wird in der jeweils vorgesehenen Form in die Brühkammer eingefüllt: unverpackt oder in geeigneten Behältern, wie beispielsweise Beuteln, verpackt.

Nebst der Fassung 13, dem Hebel 33 und dem Artenschalter 42 weist die erfindungsgemässe Kaffeemaschine nur noch ein Bedienungselement auf: einen Hauptschalter 43. Dieser hat drei Stellungen, welche beispielsweise "Dampf", "Off" und "Kaffee" genannt werden können, und vereinigt zwei Funktionen. Erstens ist er der Schalter zur In- und Ausserbetriebsetzung der gesamten Kaffeemaschine. Bei der Stellung "Off" ist die Kaffeemaschine ausgeschaltet und verbraucht keine Energie, im Gegensatz zu herkömmlichen Kaffeemaschinen im Bereitschaftszustand. Der Benützer bestimmt die herausfliessende Kaffeemenge, indem er den Kaffeefluss durch Umschalten von "Off" auf "Kaffee" in Gang setzt und danach durch Umschalten von "Kaffee" auf "Off" wieder abstellt. Analoges gilt für die Dampfmenge. Zweitens ist der Hauptschalter ein Temperaturregler für das aus dem Dampfrohr 35 ausströmende Medium. Befindet sich der Hebel 33 in der oberen Stellung, so strömt bei der Hauptschalterstellung "Dampf" Dampf aus dem Dampfrohr 35, bei der Hauptschalterstellung "Kaffee" hingegen heisses Wasser. Ausserdem wird bei der Hauptschalterstellung "Dampf" der Wasserzufluss dann mechanisch blokkiert, wenn sich der Hebel 33 in der unteren Stellung befindet. **Tabelle 3** fasst die Auswirkungen aller möglichen Hebel- und Hauptschalterstellungen zusammen. Die erfindungsgemässe Kaffeemaschine kann wahlweise auch mit einer Vorrichtung zur automatischen Regulierung der Kaffeemenge ausgestattet sein.

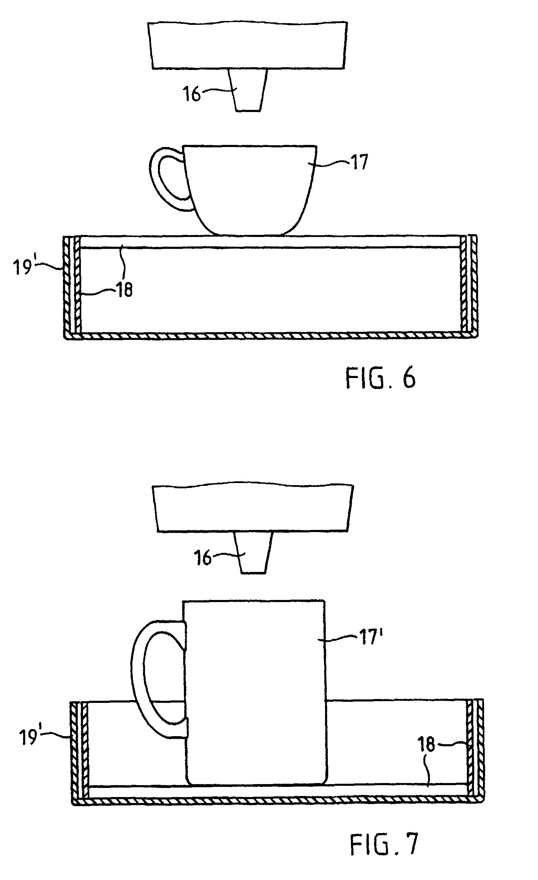

Das Abstellgitter 18, auf welches die Kaffeetassen 17 gestellt werden, ist so konzipiert, dass es im Einsatz 19' gewendet werden kann. So können zwei verschiedene Abstände zwischen Ausguss 16 und Abstellgitter 18 eingestellt werden, wodurch ermöglicht wird, Kaffeetassen 17, 17' ganz verschiedener Höhe unter die Kaffeemaschine zu stellen. Der Abstand zwischen Ausguss 18 und Kaffeetasse 17 darf nämlich nicht zu gross sein, sonst bildet sich beim Kaffee kein Schaum. **Figur 6** zeigt eine kleine Kaffeetasse 17 auf dem Abstellgitter 18 in erhöhter Stellung, **Figur 7** eine grosse Kaffeetasse 17' auf dem Abstellgitter 18 in erniedrigter Stellung.

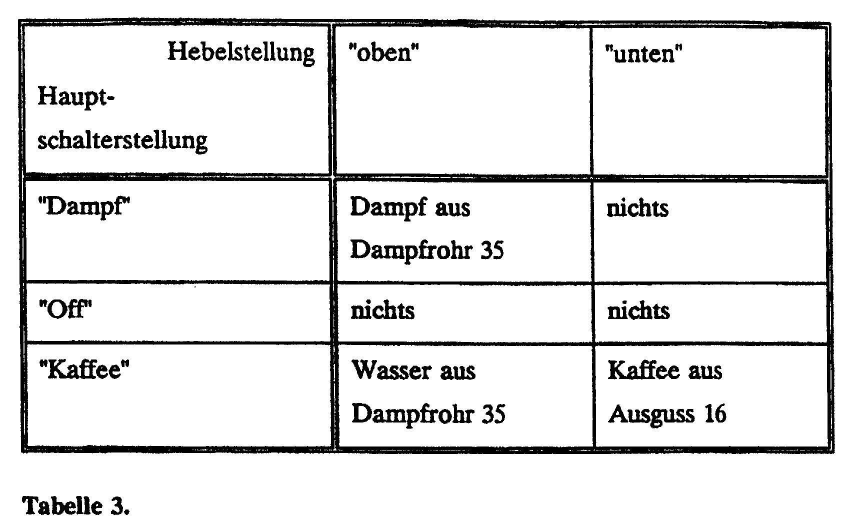

Zusammengefasst besteht die erfindungsgemässe Kaffeemaschine im wesentlichen aus einer Wasservorratskammer 1, einer Pumpe 5, einem Durchlauferhitzer 8 zum Erhitzen des Wassers und einer Brühkammer 10 zur Aufnahme von Kaffeegut 10'. Der Durchlauferhitzer 8 weist eine kleine Wärmekapazität auf. Die erfindungsgemässe Kaffeemaschine ist mit mindestens einem Temperatursensor 31 am Ende des Durchlauferhitzers 8 oder zwischen Durchlauferhitzer und Brühkammer 10 sowie mit einem Regelkreis ausgestattet, dessen Regelgrösse die Wassertemperatur T am Ende des Durchlauferhitzers ist. Die ungeheizten Teile 9-12 entlang des Wasserpfades zwischen Durchlauferhitzer 8 und Kaffeegut 10' sind bezüglich mechanischen und thermischen Eigenschaften derart optimiert, dass sie für einen im System entstehenden Überdruck eine genügende Festigkeit haben und kleine Wärmekapazitäten sowie gegenüber Wasser kleine Wärmedurchgangskoeffizienten aufweisen.

## Patentansprüche

1. Kaffeemaschine mit einer Wasservorratskammer (1), einer Pumpe (5) und einer Brühkammer (10) zur Aufnahme von Kaffeegut (10'), **dadurch gekennzeichnet,**
dass sie einen Durchlauferhitzer (8) zum Erhitzen von Wasser aufweist, welcher ein mit Wasser durchströmbares Innenrohr (23), mindestens eine um das Innenrohr (23) angebrachte innere Isolationsschicht (24-26) und einen um die mindestens eine innere Isolationsschicht (24-26) gewickelten Heizdraht (27) enthält, so dass die Wärmekapazität des Durchlauferhitzers klein ist,
dass sie mit mindestens einem Temperatursensor (31) am Ende des Durchlauferhitzers (8) oder zwischen Durchlauferhitzer (8) und Brühkammer (10) sowie mit einem Regelkreis ausgestattet ist, dessen Regelgrösse die Wassertemperatur (T) am Ende des Durchlauferhitzers (8) ist und
dass ungeheizte Teile (9-12) entlang des Wasserpfades zwischen Durchlauferhitzer (8) und Kaffeegut (10') für einen im System entstehenden Druck von 10 bar eine genügende Festigkeit aufweisen und aus hochporösem keramischem Material, Kunststoff oder rostfreiem Stahl bestehen, so dass sie kleine Wärmekapazitäten sowie gegenüber Wasser kleine Wärmedurchgangskoeffizienten aufweisen.

2. Kaffeemaschine nach Anspruch 1, **dadurch gekennzeichnet**, dass ein oder mehrere ungeheizte Teile (9-12) entlang des Wasserpfades aus wärmeisolierendem Material bestehen.

3. Kaffeemaschine nach einem der Ansprüche 1-2, **dadurch gekennzeichnet**, dass der Durchlauferhitzer (8) mindestens eine um den Heizdraht angebrachte äussere Isolationsschicht (28-30) aufweist.

4. Kaffeemaschine nach einem der Ansprüche 1-3, **dadurch gekennzeichnet**, dass das Innenrohr (23) des Durchlauferhitzers (8) aus Aluminium, rostfreiem Stahl oder hochtemperaturbeständigem Kunststoff, die Isolationsschichten (24-26, 28-30) aus hochtemperaturbeständigem Kunststoff und der Heizdraht (27) aus einer hochohmigen Metallegierung bestehen.

5. Kaffeemaschine nach einem der Ansprüche 1-4, **dadurch gekennzeichnet**, dass zur Vermeidung von Kalkablagerungen im Rohrinnern der Durchlauferhitzer (8) schwimmend gelagert ist, die Pumpe (5) beweglich oder fliegend aufgehängt ist und beim Betrieb vibriert und Durchlauferhitzer und Pumpe derart verbunden sind, dass der Durchlauferhitzer durch die Pumpe zu Vibrationen angeregt werden kann.

6. Kaffeemaschine nach einem der Ansprüche 1-5, **dadurch gekennzeichnet**, dass er einen Mikroprozessor (32) zur Überwachung und Steuerung der Pumpleistung (P_{P}) der Pumpe (5), der Heizleistung (P_{H}) des Durchlauferhitzers (8) und der Aufheizzeit (t) enthält.

7. Kaffeemaschine nach Anspruch 6, **dadurch gekennzeichnet**, dass der Mikroprozessor (32) bei jeder Kaffeeherstellung aus der Pumpleistung (P_{P}) der Pumpe (5), der Heizleistung (P_{H}) des Durchlauferhitzers (8) und der Aufheizzeit (t) ein Mass für die Verkalkung des Innenrohrs (23) des Durchlauferhitzers (8) berechnet und ein akustisches und/oder optisches Warnsignal auslöst, falls die Verkalkung einen bestimmten kritischen Wert überschritten hat.

8. Kaffeemaschine nach einem der Ansprüche 1-7, **dadurch gekennzeichnet**, dass die Brühkammer (10) im wesentlichen aus einem Brühkammerunterteil (11) und einem Brühkammerdeckel (12) besteht.

9. Kaffeemaschine nach Anspruch 8, **dadurch gekennzeichnet**, dass zwecks Herstellung von verschiedenen Kaffeearten verschiedene Brühkammerunterteile (11) modulartig vom Benützer in eine Fassung (13) einsetzbar ist, welche Fassung ihrerseits in die Kaffeemaschine einschiebbar ist.

10. Kaffeemaschine nach Anspruch 8 oder 9, **dadurch gekennzeichnet**, dass sie als Brühkammerverschluss (15) einen durch den Benützer bewegbaren Hebel (33), einen mit dem Hebel verbundenen Exzenter (34) und einen durch den Exzenter auf und ab bewegbaren Brühkammerdeckel (12), durch welchen die Brühkammer (10) verschliessbar ist, wenn ihr Unterteil (11) in die Kaffeemaschine eingeschoben ist, aufweist.

11. Kaffeemaschine nach Anspruch 10, **dadurch gekennzeichnet**, dass der Hebel (33) gleichzeitig den Wasserausgang steuert, indem bei offener Brühkammer (10) Dampf oder heisses Wasser in ein Dampfrohr (35) und bei geschlossener Brühkammer heisses Wasser zum Kaffeegut (10') geleitet wird.

12. Kaffeemaschine nach Anspruch 11, **dadurch gekennzeichnet**, dass die Weichenstellung für einen der beiden Pfade am Eingang eines Verbindungsrohrs geschieht, welches sich in einem Rohrgehäuse (36) befindet, gegen letzteres mit zwei Dichtringen (37, 38) abgedichtet ist und mit dem Brühkammerdeckel (12) mitbewegt werden kann, und zwar derart, dass sich bei offener Brühkammer (10) der obere Dichtring (37) über dem Wassereingang (39) befindet, das Einströmen des heissen Wassers oder des Dampfes ins Verbindungsrohr (9) verhindert und das heisse Wasser oder der Dampf zum Eingang (40) des Dampfrohrs (35) strömen kann, und dass sich bei geschlossener Brühkammer der obere Dichtring unter dem Wassereingang befindet und das heisse Wasser zum Eingang (41) des Verbindungsrohrs strömen kann.

13. Kaffeemaschine nach Anspruch 11 oder 12, **dadurch gekennzeichnet**, dass sie einen Hauptschalter (43), welcher einerseits der Schalter zur In- und Ausserbetriebsetzung der Kaffeemaschine und andererseits ein Temperaturregler für das aus dem Dampfrohr (35) ausströmende Medium ist, aufweist.

14. Kaffeemaschine nach Anspruch 13, **dadurch gekennzeichnet**, dass der Hauptschalter (43) drei Stellungen, welche beispielsweise "Dampf", "Off" und "Kaffee" genannt werden können, aufweist, so dass bei der Stellung "Off" ist die Kaffeemaschine ausgeschaltet ist, der Kaffeefluss aus einem Ausguss (16) bzw. der Heisswasserfluss aus dem Dampfrohr (35) durch Umschalten von "Off" auf "Kaffee" in Gang gesetzt und durch Umschalten von "Kaffee" auf "Off" wieder abgestellt werden kann und das Ausströmen von Dampf aus dem Dampfohr durch Umschalten von "Off" auf "Dampf" in Gang gesetzt und durch Umschalten von "Dampf" auf "Off" wieder abgestellt werden kann.

15. Kaffeemaschine nach einem der Ansprüche 1-14, **dadurch gekennzeichnet**, dass die Wasservorratskammer (1) sichtbar oben auf der Kaffeemaschine angebracht ist, aus einem durchsichtigen Material besteht, durch den Benützer abmontierbar und mit einem Deckel (3) versehen ist.

16. Kaffeemaschine nach einem der Ansprüche 1-15, **dadurch gekennzeichnet**, dass sie einen beschwerten Sockel (19) aufweist, um ihre Stabilität zu verbessern.

17. Kaffeemaschine nach Anspruch 16, **dadurch gekennzeichnet**, dass sie ein im Sockel (19) eingesetztes Abstellgitter (18) unterhalb des Ausgusses (16) aufweist, auf welches Kaffeetassen (17, 17') gestellt werden können, und dass das Abstellgitter so konzipiert ist, dass es gewendet werden kann, um die Einstellung zweier verschiedener Abstände zwischen Ausguss und Abstellgitter zu ermöglichen.

## Claims

1. Coffee machine having a water-storage chamber (1), a pump (5) and a brewing chamber (10) for holding coffee grounds (10'), characterized in that it has a flow heater (8) for heating water, which flow heater contains an internal pipe (23) through which water can flow, at least one inner insulating layer (24-26) mounted around the internal pipe (23) and a heating wire (27) which is wound around the at least one inner insulating layer (24-26), so that the heat capacity of the flow heater is small,
in that it is equipped with at least one temperature sensor (31) at the end of the flow heater (8) or between the flow heater (8) and brewing chamber (10), and also with a control circuit whose controlled variable is the water temperature (T) at the end of the flow heater (8), and
in that unheated parts (9-12) along the water path between the flow heater (8) and coffee grounds (10') are of a sufficient strength for a pressure of 10 bar produced in the system and consists of highly porous, ceramic material, plastic or stainless steel, so that they have small heat capacities and small coefficients of heat transfer with respect to water.

2. Coffee machine according to Claim 1, characterized in that one or more unheated parts (9-12) along the water path consist of heat-insulating material.

3. Coffee machine according to one of Claims 1-2, characterized in that the flow heater (8) has at least one outer insulating layer (28-30) mounted around the heating wire.

4. Coffee machine according to one of Claims 1-3, characterized in that the internal pipe (23) of the flow heater (8) consists of aluminium, stainless steel or plastic with high temperature stability, the insulating layers (24-26, 28-30) consist of plastic with high temperature stability, and the heating wire (27) consists of a high-resistance metal alloy.

5. Coffee machine according to one of Claims 1-4, characterized in that in order to avoid furring in the pipe interior, the flow heater (8) is mounted in a floating manner, the pump (5) is suspended in a movable or hanging manner and vibrates during operation, and the flow heater and pump are connected in such a manner that the flow heater can be made to vibrate by the pump.

6. Coffee machine according to one of Claims 1-5, characterized in that it contains a microprocessor (32) for monitoring and controlling the pumping power (P_{P}) of the pump (5), the heating power (P_{H}) of the flow heater (8) and the heating-up time (t).

7. Coffee machine according to Claim 6, characterized in that during each preparation of coffee the microprocessor (32) calculates a quantity for the calcification of the internal pipe (23) of the flow heater (8) from the pumping power (P_{P}) of the pump (5), the heating power (P_{H}) of the flow heater (8) and the heating-up time (t), and triggers an acoustic and/or visual warning signal if the calcification has exceeded a certain critical value.

8. Coffee machine according to one of Claims 1-7, characterized in that the brewing chamber (10) consists essentially of a brewing-chamber lower part (11) and a brewing-chamber cover (12).

9. Coffee machine according to Claim 8, characterized in that for the purpose of preparing different types of coffee, different brewing-chamber lower parts (11) can be inserted in a modular manner by the user into a holder (13), which holder, for its part, can be pushed into the coffee machine.

10. Coffee machine according to Claim 8 or 9, characterized in that as a brewing-chamber seal (15) it has a lever (33) which can be moved by the user, an eccentric cam (34) which is connected to the lever and a brewing-chamber cover (12) which can be moved up and down by the eccentric cam and by means of which the brewing chamber (10) can be closed if its lower part (11) is pushed into the coffee machine.

11. Coffee machine according to Claim 10, characterized in that the lever (33) at the same time controls the water output by steam or hot water being conducted into a steam pipe (35) when the brewing chamber (10) is open, and when the brewing chamber is closed, by hot water for the coffee grounds (10') being conducted therein.

12. Coffee machine according to Claim 11, characterized in that the switch position for one of the two paths takes place at the inlet of a connecting pipe which is situated in a pipe housing (36), is sealed with respect to the latter by two sealing rings (37, 38) and can be moved together with the brewing-chamber cover (12), specifically in such a manner that when the brewing chamber (10) is open, the upper sealing ring (37) is situated above the water inlet (39) and prevents the hot water or steam from flowing into the connecting pipe (9), and the hot water or the steam can flow to the inlet (40) of the steam pipe (35), and in that when the brewing chamber is closed, the upper sealing ring is situated below the water inlet and the hot water can flow to the inlet (41) of the connecting pipe.

13. Coffee machine according to Claim 11 or 12, characterized in that it has a main switch (43) which, on the one hand, is the switch for bringing the coffee machine into and out of operation and, on the other hand, is a temperature control device for the medium flowing out of the steam pipe (35).

14. Coffee machine according to Claim 13, characterized in that the main switch (43) has three positions which may, for example, be called "steam", "off" and "coffee", so that in the "off" position the coffee machine is switched off, the flow of coffee from a nozzle (16) or the hot-water flow from the steam pipe (35) can be set going by switching over from "off" to "coffee" and can be shut off again by switching over from "coffee" to "off", and the discharging of steam from the steam pipe can be set going by switching over from "off" to "steam" and can be shut off again by switching over from "steam" to "off".

15. Coffee machine according to one of Claims 1-14, characterized in that the water-storage chamber (1) is mounted visibly on top of the coffee machine, consists of a transparent material, can be removed by the user and is provided with a cover (3).

16. Coffee machine according to one of Claims 1-15, characterized in that it has a weighted base (19) in order to improve its stability.

17. Coffee machine according to Claim 16, characterized in that it has a set-down grate (18) inserted in the base (19) below the nozzle (16), on which grate coffee cups (17, 17') can be placed, and in that the set-down grate is designed in such a manner that it can be turned in order to make it possible for two different distances between the nozzle and set-down grate to be set.

## Revendications

1. Machine à café équipée d'un réservoir à eau (1), d'une pompe (5) et d'une chambre d'ébullition (10) pour recueillir le café (10')
caractérisée en ce qu'elle présente un chauffe-eau (8) pour réchauffer l'eau, qui comprend un tuyau intérieur (23) à travers lequel peut circuler l'eau, au moins une couche isolante intérieure (24 à 26) appliquée autour du tuyau intérieur (23) et un filament chauffant (27) enroulé autour d'au moins une couche isolante intérieure (24 à 26), de telle sorte que la capacité thermique du chauffe-eau est faible,
en ce qu'elle est équipée d'au moins un capteur de température (31) à l'extrémité du chauffe-eau (8) ou bien entre le chauffe-eau (8) et la chambre d'ébullition (10), et d'un circuit de réglage dont la valeur de réglage est égale à la température de l'eau (T) à l'extrémité du chauffe-eau (8)
et en ce que pour l'établissement dans le système d'une pression de 10 bar les parties non chauffées (9 à 12) le long du parcours de l'eau entre le chauffe-eau (8) et le café (10') sont suffisamment solides et sont réalisées en un matériau céramique présentant une porosité élevée, en une matière plastique ou encore en acier inoxydable, de telle sorte qu'elles présentent de faibles capacités thermiques ainsi que des coefficients de transfert de chaleur réduits.

2. Machine à café selon la revendication 1, caractérisée en ce qu'une ou plusieurs parties non chauffées (9 à 12) le long du parcours de l'eau sont réalisées en un matériau thermo-isolant.

3. Machine à café selon l'une des revendications 1 et 2, caractérisée en ce que le chauffe-eau (8) comporte au moins une couche isolante extérieure (28 à 30) appliquée autour de la résistance de chauffage.

4. Machine à café selon l'une des revendications 1 à 3, caractérisée en ce que le tuyau intérieur (23) du chauffe-eau (8) est réalisé en aluminium, en acier inoxydable ou en matière plastique résistant à des températures élevées et en ce que les couches isolantes (24 à 26, 28 à 30) sont réalisées en une matière plastique résistant à des températures élevées et le filament chauffant (27) est réalisé en un alliage métallique à résistance élevée.

5. Machine à café selon l'une des revendications 1 à 4, caractérisée en ce que pour éviter le dépôt de calcaire dans le tuyau intérieur, le chauffe-eau (8) est flottant, la pompe (5) est suspendue de façon mobile ou amovible et elle vibre quand elle est en service et le chauffe-eau et la pompe sont connectés de manière que le chauffe-eau puisse être amené à vibrer par la pompe.

6. Machine à café selon l'une des revendications 1 à 5, caractérisée en ce qu'elle contient un microprocesseur (32) permettant de surveiller et de contrôler la capacité de pompage (P_{P}) de la pompe (5), la capacité de chauffage (P_{H}) du chauffe-eau (8) et le temps de chauffage (t).

7. Machine à café selon la revendication 6, caractérisée en ce que le microprocesseur (32) calcule à chaque fois que la machine fait du café, à partir de la capacité de pompage (P_{P}) de la pompe (5), de la capacité de chauffage (P_{H}) du chauffe-eau (8) et du temps de chauffage (t), une mesure de l'entartrage du tuyau intérieur (23) du chauffe-eau (8) et envoie un signal avertisseur acoustique et/ou optique, au cas où l'entartrage a dépassé une valeur-seuil critique déterminée.

8. Machine à café selon l'une des revendications 1 à 7, caractérisée en ce que la chambre d'ébullition (10) se compose essentiellement d'un sous-élément de chambre d'ébullition (11) et d'un couvercle de chambre d'ébullition (12).

9. Machine à café selon la revendication 8, caractérisée en ce que, afin de pouvoir préparer différentes variétés de café, l'utilisateur peut adapter des sous-éléments de chambre d'ébullition (11) de manière modulable dans un support (13), lequel support peut être lui-même adapté sur la machine à café.

10. Machine à café selon la revendication 8 et 9, caractérisé en ce que le dispositif de fermeture de la chambre d'ébullition (15) se présente sous forme d'un levier (33) que l'utilisateur peut actionner, un excentrique (34) relié au levier et un couvercle de chambre d'ébullition (12) que l'excentrique peut déplacer vers le haut et vers le bas, lequel couvercle permet de fermer la chambre d'ébullition (10) lorsque sa partie inférieure (11) a glissé à l'intérieur de la machine.

11. Machine à café selon la revendication 10, caractérisée en ce que le levier (33) commande simultanément la sortie d'eau, la vapeur ou l'eau chaude étant acheminée dans un tuyau à vapeur (35) lorsque la chambre d'ébullition (10) est ouverte, et lorsque la chambre d'ébullition est fermée, l'eau chaude est acheminée vers le café (10').

12. Machine à café selon la revendication 11, caractérisée en ce que l'aiguillage vers un des deux parcours se produit à l'entrée d'un tuyau de connexion qui se trouve dans une gaine de tuyau (36) et qui est rendu étanche vis-à-vis de celle-ci à l'aide de deux joints d'étanchéité (37,38) et qui est amovible, en même temps que le couvercle de la chambre d'ébullition (12), de telle sorte que lorsque le joint d'étanchéité supérieur (37) se trouve au-dessus de l'entrée d'eau (39), la chambre d'ébullition (10) est ouverte, ce qui rend impossible l'arrivée de l'eau chaude ou de la vapeur dans le tuyau de connexion (9) et l'eau chaude ou la vapeur s'écoule vers l'entrée (40) du tuyau à vapeur (35), et que lorsque la chambre d'ébullition est fermée, le joint d'étanchéité supérieur se trouve au-dessous de l'entrée d'eau et l'eau chaude peut s'écouler vers l'entrée (41) du tuyau de connexion.

13. Machine à café selon la revendication 11 ou 12, caractérisée en ce qu'elle présente un commutateur principal (43) constitué d'une part d'un commutateur pour allumer et éteindre la machine à café et d'une autre part d'un régulateur de température pour le milieu provenant du tuyau à vapeur (35).

14. Machine à café selon la revendication 13, caractérisée en ce que le commutateur principal (43) présente trois positions, qui peuvent être nommées par exemple « vapeur », « arrêt » et « café », de telle sorte que dans la position « arrêt », la machine à café est arrêtée, l'écoulement du café par un bec verseur (16) ou l'écoulement de l'eau chaude par le tuyau à vapeur (35) pouvant être déclenchés en passant de la position « arrêt» à la position « café » et peut être interrompu en repassant de la position « café» à la position « arrêt » et l'échappement de la vapeur du tuyau à vapeur est déclenché en passant de la position « arrêt » à la position « vapeur » et peut être interrompu en passant de la position « vapeur » à la position « arrêt ».

15. Machine à café selon l'une des revendications 1 à 14, caractérisée en ce que le réservoir d'eau (1), monté à la partie supérieure de la machine à café, est réalisé dans un matériau translucide pouvant être démonté par l'utilisateur et est pourvu d'un couvercle (3).

16. Machine à café selon une des revendications 1 à 15, caractérisée en ce qu'elle présente un socle lesté (19) qui améliore sa stabilité.

17. Machine à café selon la revendication 16, caractérisée en ce qu'elle présente une grille-support (18) sous le bec verseur (16) dans le socle (19) pour y poser les tasses à café (17, 17'), et en ce que la grille-support est constituée de telle sorte qu'elle peut être tournée, pour pouvoir utiliser deux distances différentes entre le bec verseur et la grille-support.
